# FASCICULE DE BREVET EUROPEEN

(11) **EP 1 568 424 B1**
(45) Date de publication et mention de la délivrance du brevet: **17.10.2007**
(21) Numéro de dépôt: 05101429.8
(22) Date de dépôt: 24.02.2005
(51) Int. Cl.: B21J 17/02, B21J 13/03, B21K 3/04, B30B 15/02, C21D 1/673, B23P 15/02

(54) **Presse pour le maintien et le pressage d'une pièce**
Presse zum Halten und Pressen eines Werkstücks
Press for holding and pressing a workpiece

(30) Priorité: 27.02.2004 FR 0402005
(43) Date de publication de la demande: 31.08.2005
(73) Titulaire: SNECMA, 75015 Paris (FR)
(72) Inventeur: Aubry, Patrick, 60530 Crouy en thelle (FR); Bourgeois, Alain, Paul, 92500 Rueil Malmaison (FR); Lorieux, Alain, 95110 Sannois (FR)
(74) Mandataire: David, Daniel

(56) Documents cités:
- GB-A- 721 478
- US-A- 5 277 045
- PATENT ABSTRACTS OF JAPAN vol. 0102, no. 07 (M-500), 19 juillet 1986 (1986-07-19) & JP 61 049734 A (NISSAN MOTOR CO LTD), 11 mars 1986 (1986-03-11)

## Description

L'invention concerne une presse pour le maintien et le pressage d'une pièce, en particulier pour une aube en titane d'une turbomachine.

Une aube de compresseur de turboréacteur, par exemple, est une pièce formée par forgeage. L'aube est tout d'abord estampée. Cette opération donne sa forme à l'aube mais induit également des contraintes en son sein, qu'il faut équilibrer. A cet effet, l'aube est mise dans une presse, où elle est chauffée et pressée entre deux matrices comportant une empreinte dont la forme correspond à celle de l'aube. Il en résulte une relaxation des contraintes au sein de l'aube.

L'art antérieur, notamment pour les pièces telles que les aubes de fan, enseigne l'utilisation d'une presse dont au moins un plateau, supportant une matrice, est mobile en translation verticale grâce à un vérin hydraulique, pour engendrer une pression sur l'aube en titane par appui sur l'autre matrice, elle aussi supportée par un plateau. Le tout est inclus dans un four possédant une enceinte isotherme, classiquement chauffée à une température située entre 700°C et 900°C pendant une durée déterminée.

Les aubes sont de formes tridimensionnelles complexes. Un mauvais positionnement de l'aube entre les matrices peut engendrer l'application d'une pression non uniforme sur sa surface et donc la formation de nouvelles contraintes, ce qui est l'inverse du but recherché. Le réglage des matrices l'une par rapport à l'autre est donc très délicat, et une variation infime de l'angle d'attaque de la matrice mobile entraîne les inconvénients susmentionnés.

La présente invention vise à pallier ces inconvénients.

JP 61-49734 divulgue une presse selon le préambule de la revendication 1.

A cet effet, l'invention concerne une presse, comportant un premier élément et un second élément de maintien et de pressage d'une pièce à traiter entre eux, le premier élément étant entraîné en translation verticale par rapport au second élément par des moyens d'entraînement, lesdits éléments comprennent des moyens de positionnement l'un par rapport à l'autre en fin de course, caractérisé par le fait que le premier élément est monté flottant par rapport au second élément, libre en translation et en rotation sur et autour du plan horizontal.

Par flottant, on comprend donc que le premier élément comporte des libertés de mouvement dans un certain nombre de directions, éventuellement les six, dans une certaine mesure, c'est-à-dire de façon dimensionnellement bridée par rapport à la dimension de la course en translation autorisée par les moyens d'entraînement.

De préférence, la presse comprend des moyens de guidage en translation du premier élément et un jeu est ménagé entre le premier élément et les moyens de guidage.

De préférence encore, le premier élément et le second élément comprennent chacun une matrice de maintien et de pressage de la pièce.

De préférence toujours, les moyens de positionnement du premier élément par rapport au second élément comprennent au moins un doigt de positionnement coopérant avec un alésage.

Avantageusement dans ce cas, la matrice du premier élément comprend au moins un dit doigt de positionnement et la matrice du second élément comprend au moins un dit alésage.

Avantageusement encore, chaque doigt de positionnement comprend une portion de forme cylindrique et une portion de forme tronconique.

Dans la forme de réalisation préférée de la presse de l'invention, les moyens d'entraînement comprennent un vérin pneumatique.

Selon une autre caractéristique de l'invention, la presse, disposée verticalement, comporte au moins une entretoise de soutien du premier élément dans une position et des seconds moyens d'entraînement en translation du second élément par rapport au premier élément.

De préférence dans ce cas, les seconds moyens d'entraînement en translation comprennent un vérin hydraulique.

Conformément à l'invention, chaque élément comprend un plateau et un support isolant chauffant supportant la matrice.

Avantageusement dans ce cas, au moins une couche d'isolant thermique est disposée à la périphérie des matrices.

De préférence, au moins un support isolant chauffant comprend des résistances de chauffage.

Selon une première forme de réalisation de l'invention, les résistances de chauffage sont contenues dans des cartouches.

Selon une seconde forme de réalisation de l'invention, les résistances de chauffage sont noyées et serties dans le support isolant chauffant.

L'invention concerne en particulier l'utilisation d'une presse pour le redressage thermique d'une aube de turbomachinc formée par forgeage, mais la demanderesse n'entend pas limiter la portée de ses droits à cette application.

L'invention sera mieux comprise à l'aide de la description suivante de la forme de réalisation préférée de la presse de l'invention, en référence au dessin annexé, sur lequel :
- la figure 1 représente une vue schématique de profil en coupe de la forme de réalisation préférée de la presse de l'invention , avec la matrice inférieure en position basse, pour la moitié gauche de la figure 1, et la matrice supérieure en position haute, pour la moitié droite de la figure 1 ;
- la figure 2 représente une vue schématique de dessus de la partie inférieure de la forme de réalisation préférée de la presse de l'invention ;
- la figure 3 représente une vue schématique de dessus d'une première forme de réalisation du support isolant chauffant inférieur de la presse de l'invention ;
- la figure 4 représente une vue schématique de dessus d'une seconde forme de réalisation du support isolant chauffant inférieur de la presse de l'invention.

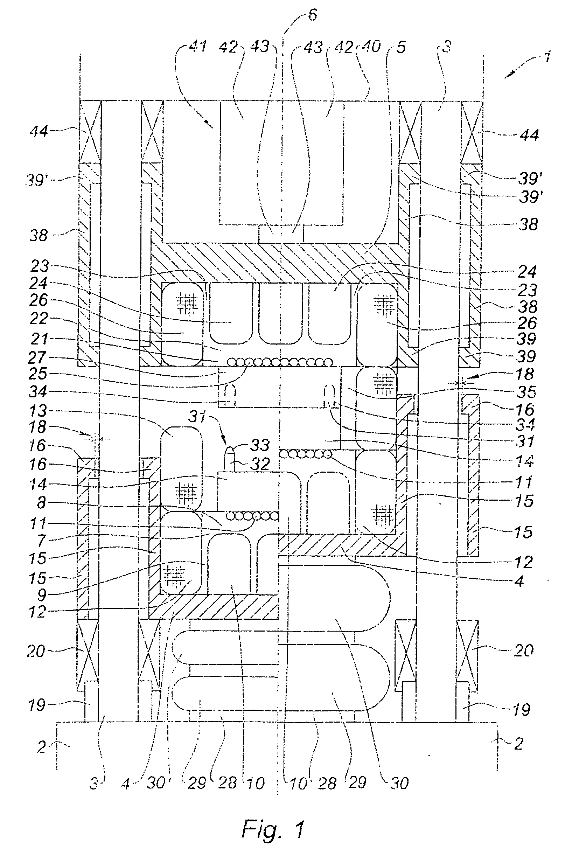

En référence à la figure 1, la presse 1 de l'invention comprend une embase structurale 2, supportant quatre colonnes 3, qui forment un cadre, ou bâti, parallélépipédique de la presse 1. Les colonnes 3 supportent un plateau inférieur 4 et un plateau supérieur 5, ici de forme circulaire. Sur la figure 1, la presse 1 est représentée dans deux configurations différentes, la figure 1 étant découpée en deux parties, de part et d'autre d'un plan de symétrie globale 6 vertical de la presse 1. Le plateau inférieur 4 est mobile en translation verticale. A gauche du plan de symétrie 6, le plateau inférieur 4 est représenté en position basse, à droite du plan de symétrie 6, le plateau inférieur 4 est représenté en position haute, comme il sera décrit plus précisément par la suite.

Le plateau inférieur 4 supporte, dans sa partie centrale, un support inférieur isolant chauffant 7, qui comprend un plateau 8 circulaire supporté par des parois verticales 9. Le plateau 8 pourrait présenter une autre forme. Les parois verticales 9 définissent entre elles des cavités 10 contenant un isolant thermique, comprenant par exemple des fibres de céramique. Le plateau 8 du support inférieur isolant chauffant 7 contient des résistances chauffantes 11 qui seront décrites plus précisément par la suite.

Le plateau inférieur 4 supporte, le long de sa partie périphérique, autour du support inférieur isolant chauffant 7 et sur la hauteur de ce dernier, une couche d'isolant thermique inférieure 12. Cette couche d'isolant thermique inférieure 12 supporte quant à elle une couche d'isolant thermique intermédiaire 13, qui s'étend au droit de l'isolant thermique inférieur 12, au-dessus du niveau du support inférieur isolant chauffant 7.

Le plateau 8 du support inférieur isolant chauffant 7 supporte une matrice inférieure 14 de pressage d'une pièce formée par forgeage, cette dernière non représentée. La matrice 14 est ici de forme circulaire.

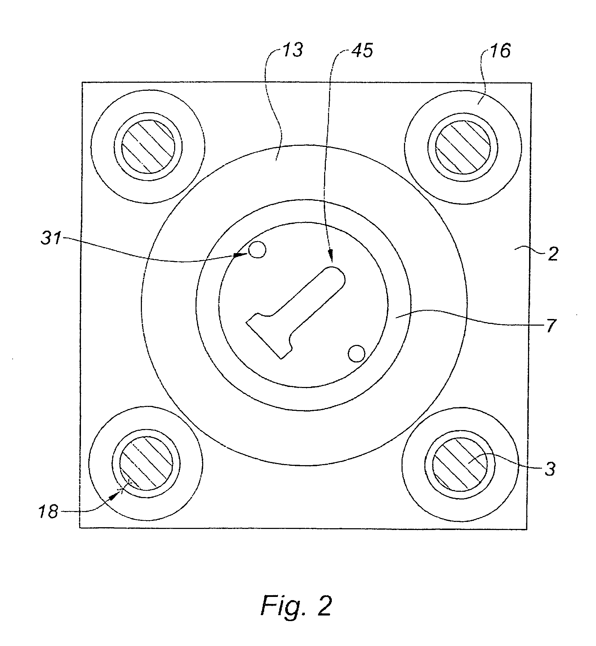

En référence à la figure 2, la matrice inférieure 14 comprend une empreinte 45 dont la forme s'adapte, pour sa moitié inférieure, à la forme de la pièce formée par forgeage, qui est dans la forme de réalisation préférée de l'invention une aube en titane d'un turboréacteur.

Il peut être prévu, entre le plateau 8 du support inférieur isolant chauffant 7 et la matrice inférieure 14, un système de cales pentée s permettant de supprimer le jeu entre ces deux éléments 8, 14 et remplaçant avantageusement un assemblage par visserie classique, mal adapté aux utilisations à haute température.

Le plateau inférieur 4 supporte, en quatre points diamétralement opposés deux à deux, un manchon 15, entourant la colonne 3 correspondant au coin considéré, s'étendant au-dessus du plateau 4, à l'extérieur de ce dernier. Le manchon 15 est, à son extrémité inférieure, solidaire du plateau inférieur 4. Chaque manchon 15 comporte, à son extrémité supérieure, un e couronne 16, destinée à coulisser en translation le long de la colonne 3. Par le biais des manchons 15, le plateau inférieur 4 est solidaire des couronnes 16 qui remplissent, avec leur colonne 3 correspondante, une fonction de guidage du plateau inférieur 4 en translation.

La liaison glissière entre chaque couronne 16 et la colonne 3 correspondante est faite avec jeu. Ce jeu est illustré sur les figures 1 et 2 par une flèche 18. Ce jeu permet notamment des mouvements de translation et rotation dans le plan perpendiculaire à l'axe de la translation, c'est-à-dire ici le plan horizontal, ainsi que des mouvements de rotation autour d'axes compris dans ce plan.

A la base de chaque colonne 3, sur son embase 2, la presse 1 comprend une cale 19, supportant une entretoise 20 supportant le plateau inférieur 4, par la base de ses manchons 15, lorsque le plateau inférieur 4 est en position basse. Les entretoises 20 permettent de régler l'altitude désirée du plateau inférieur 4 en position basse.

Le plateau supérieur 5 soutient, dans sa partie centrale, un support supérieur isolant chauffant 21 qui comprend un plateau 22 circulaire soutenu par des parois verticales 23. Le plateau 22 pourrait présenter une autre forme. Les parois verticales 23 défini ssent entre elles des cavités 24 contenant un isolant thermique, comprenant par exemple des fibres de céramique. Le plateau 22 du support supérieur isolant chauffant 21 contient des résistances chauffantes 25 qui seront décrites plus précisément par la suite.

Le plateau supérieur 5 soutient, le long de sa partie périphérique, autour du support supérieur isolant chauffant 21 et sur la hauteur de ce dernier, une couche d'isolant thermique supérieure 26.

Le plateau 22 du support supérieur isolant chauffant 21 soutient une matrice supérieure 27 de pressage de l'aube. La matrice 27 est ici de forme circulaire. La matrice supérieure 27 comprend une empreinte dont la forme s'adapte, pour sa moitié supérieure, à la forme de l'aube. Elle est la matrice complémentaire de la matrice inférieure 14 pour enserrer complètement l'aube.

Le plateau supérieur 5 est pour l'instant considéré fixe dans une position supérieure.

La matrice inférieure 14 comporte deux doigts de positionnement 31, situés en deux points diamétralement opposés de la surface supérieure de la matrice inférieure 14 et faisant saillie verticalement hors de cette dernière. Chaque doigt de positionnement 31 comprend une portion inférieure 32 de forme cylindrique et une portion supérieure 32 de forme tronconique.

La matrice supérieure 27 comporte deux alésages 34 de réception d'un doigt de positionnement 31, situés en deux points de la surface inférieure de la matrice supérieure 27 à un placement correspondant au placement du doigt de positionnement 31 correspondant sur la matrice inférieure 14. Le diamètre de chaque alésage 34 correspond au diamètre de la portion cylindrique 32 du doigt de positionnement 31 correspondant.

Les doigts de positionnement 31 de la matrice inférieure 14 sont agencés pour coopérer avec les alésages 34 de la matrice supérieure 27 de façon à ce que, lorsque les doigts de positionnement 31 sont emmanchés dans les alésages 34, les matrices inférieure 14 et supérieure 27 soient exactement positionnées l'une par rapport à l'autre pour presser l'aube qu'elles enserrent de façon uniforme. L'agencement des doigts de positionnement 31 et des alésages 34 est donc fait en fonction des empreintes que comprennent les matrices 14, 27, de façon à ce que celles-ci soient exactement positionnées l'une face à l'autre lorsque les doigts de positionnement 31 sont emmanchés dans les alésages 34.

Les doigts de positionnement 31 et les alésages 34 coopèrent pour remplir une fonction de positionnement de la matrice inférieure 14 par rapport à la matrice supérieure 27. D'autres moyens de positionnement pourraient être envisagés, par exemple des formes usinées sur les matrices 14, 27 de façon complémentaire pour venir s'emboîter l'une dans l'autre et positionner correctement la matrice inférieure 14 par rapport à la matrice supérieure 27.

L'embase 2 de la presse 1 de l'invention supporte un vérin pneumatique 28. Ce vérin pneumatique 28 est solidaire, sur sa partie inférieure, de l'embase 2, et solidaire, sur sa partie supérieure, de la partie inférieure du plateau inférieur 4. Entre les deux, il comprend un coussin d'a ir, ou vessie d'air, par exemple en caoutchouc, comportant deux soufflets 29, 30 situés l'un au-dessus de l'autre, et pouvant être gonflé ou dégonflé par arrivée ou départ d'air par des vannes non représentées.

Lorsque le vérin pneumatique 28 est dégonflé, comme c'est le cas sur la partie gauche de la figure 1, le plateau inférieur 4 est en position basse, en appui sur les entretoises 20, à l'altitude voulue par le dimensionnement des entretoises 20. La matrice inférieure 14 est alors éloignée de la matrice supérieure 27.

Lorsque le vérin pneumatique 28 est gonflé, il entraîne en translation verticale ascendante le plateau inférieur 4. Cette translation est autorisée par la translation qu'effectuent les couronnes 16, solidaires du plateau inférieur 4, sur les colonnes 3.

Du fait du jeu 18 existant entre les couronnes 16 et les colonnes 3 correspondantes, le plateau inférieur 4, et donc la matrice inférieure 14, qui lui est solidaire par le biais du support inférieur isolant chauffant 7, est libre en translation et rotation sur et autour du plan horizontal, du moins autant que le jeu 18 le permet. Il est donc monté flottant sur le vérin pneumatique 28 qui l'entraîne en translation verticale.

Lorsque la matrice inférieure 14 se trouve à proximité de la matrice supérieure 27 et que le vérin pneumatique 28 continue d'être gonflé, les doigts de positionnement 31 sont insérés dans les alésages correspondants 34 par leur portion tronconique 33. Du fait de la flottabilité de la matrice inférieure 14 sur le vérin pneumatique 28, cette dernière n'est pas positionnée exactement en face de la matrice supérieure 27, donc les doigts de positionnement 31 ne sont pas placés exactement en face des alésages 34, au jeu 18 près.

Les portions tronconiques 33 tolèrent un tel jeu 18, et il n'est pas nécessaire que leur axe coïncide avec celui des alésages 34 pour qu'elles y soient insérées. Le jeu entre les couronnes 16 et les colonnes 3 correspondantes est dimensionné de façon à ce que les doigts de positionnement 31 puissent toujours être insérés dans leurs alésages 34 respectifs.

Lorsque les surfaces des portions tronconiques 33 des doigts de positionnement 31 entrent en contact avec les alésages 34 et que le vérin pneumatique 28 continue d'être gonflé, elles glissent sur l'arête inférieure des alésages 34 et les doigts de positionnement 31 se placent petit à petit dans l'axe des alésages 34, par translation horizontale et/ou rotations, simultanément à la translation verticale imposée par le vérin pneumatique 28, de la matrice inférieure 14, autorisée s par le jeu 18 entre les couronnes 16 et leur colonne respective 3.

La translation se poursuit alors par l'emmanchement des portions cylindriques 32 des doigts de positionnement 31 dans leurs alésages respectifs 34 et donc par un positionnement correct des matrices inférieure 14 et supérieure 27 l'une par rapport à l'autre. Lorsque la matrice inférieure 14 vient en appui sur la matrice supérieure 27, il s'ensuit une pression sur l'aube entre les deux matrices 14, 27.

Le redressage thermique de l'aube peut alors avoir lieu, du fait de la pression exercée sur l'aube par les deux matrices 14, 27, en coopération avec le chauffage résultant des résistances chauffantes 11, 25 des matrices 14, 27.

Les couches d'isolant thermique inférieure 12, intermédiaire 13 et supérieure 26 sont agencées pour que, lorsque les matrices 14, 27 sont en appui l'une sur l'autre, la couche d'isolant thermique intermédiaire 13 vienne en contact avec la couche d'isolant thermique supérieure 26. Ainsi, lorsque les matrices 14, 27 sont en appui l'une sur l'autre, les couches d'isolant thermique 12, 13, 26 remplissent tout l'espace périphérique entre les deux plateaux inférieur 4 et supérieur 5, formant ainsi, avec les supports isolants chauffants inférieur 7 et supérieur 21, une enceinte 35 chauffée isolée thermiquement, comme on le voit sur la partie droite de la figure 1.

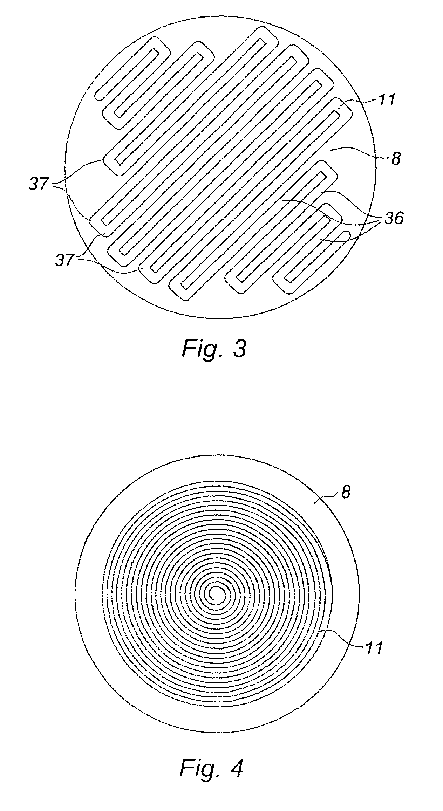

Le chauffage est assuré par les résistances de chauffage inférieures 11 et supérieures 25 situées dans les plateaux 8, 22 des supports isolants chauffants inférieur 7 et supérieur 21, respectivement, qui vont maintenant être décrites plus en détail, en référence aux figures 3 et 4. Sur ces dernières, est représenté le plateau 8 du support isolant chauffant inférieur 7 et ses résistances 11, en vue de dessus, le plateau 22 du support isolant chauffant supérieur 21 et ses résistances 25 leur étant similaires.

Sur la figure 3 est représentée une première forme de réalisation des résistances 11 du plateau 8 du support isolant chauffant inférieur 7. Le plateau 8 est ici de forme circulaire. Les résistances 11 sont contenues dans des cartouches à segments rectilignes, agencées en forme de zigzag. Ainsi, se succèdent des portions rectilignes 36 et des demi-tours, effectués grâce à deux coudes 37 à 90°, lorsque la portion rectiligne 36 s'approche du bord du plateau 8. L'ensemble est assez dense et procure un chauffage relativement homogène.

Sur la figure 4 est représentée une seconde forme de réalisation des résistances 11 du plateau 8 du support isolant chauffant inférieur 7. Dans cette forme de réalisation, les résistances 11 sont directement noyées et serties dans le plateau 8, ici selon un motif de spirale. A cet effet, elles peuvent par exemple être noyées dans des gorges usinées dans le plateau 8 puis recouvertes par de la poudre de métal déposée par une torche plasma, ou par tout autre procédé bien connu de l'homme du métier. Grâce à cette forme de réalisation, il est possible de resserrer d'avantage les résistances 11 et d'obtenir une homogénéité de chauffage plus grande.

Quelle que soit la forme de réalisation adoptée, les résistances 11, 25 chauffent chaque matrice 14, 27, le tout étant contenu dans l'enceinte isotherme 35 susmentionnée. La température est donc réglée grâce aux résistances 11, 25, par exemple à la température de 700°C. La pression des matrices 14, 27 alliée au chauffage permet d'effectuer le redressage thermique de l'aube.

Dans la forme de réalisation de mise sous presse de l'aube décrite jusqu'à présent, le plateau supérieur 5 est fixe, en position supérieure, et le plateau inférieur 4 est élevé, grâce au vérin pneumatique 29, de façon à presser les matrices 14, 27 l'une contre l'autre.

Un mode de fonctionnement additionel de la presse 1 de l'invention est autorisé, grâce au dispositif décrit ci-après, qui n'est pas incompatible avec le dispositif précédemment décrit.

En référence à la figure 1, le plateau supérieur 5 soutient, en quatre points diamétralement opposés deux à deux, un manchon vertical 38 , entourant la colonne 3 correspondant au coin considéré et s'étendant au-dessus et au-dessous du plateau supérieur 5, à l'extérieur de ce dernier.

Chaque manchon 38 comporte, à chacune de ses extrémités, inférieure et supérieure, une couronne 39, 39', respectivement, destinée à coulisser en translation le long de la colonne 3 correspondante. Par le biais des manchons 38, le plateau supérieur 5 est solidaire des couronnes 39, 39', qui remplissent, avec leur colonne 3 correspondante, une fonction de guidage en translation du plateau supérieur 5. La liaison glissière entre chaque couronne 39, 39' et la colonne 3 correspondante est faite sans jeu.

Les colonnes 3 de la presse 1 de l'invention supportent un toit 40. Ce toit 40 soutient un vérin hydraulique 41. Ce vérin hydraulique 41 comprend, en position supérieure, un cylindre 42, dans lequel est monté mobile, débouchant du côté inférieur, un piston 43, actionné par des moyens hydrauliques bien connus de l'homme du métier, non représentés. Le vérin hydraulique 41 est solidaire du toit 40 sur la partie supérieure de son cylindre 42 et solidaire de la partie supérieure du plateau supérieur 5 sur la partie inférieure de son piston 43.

Au sommet de chaque colonne 3, soutenue par son toit 40, la presse 1 soutient une entretoise 44. Le plateau supérieur 5 vient en butée sur ces entretoises 44, par le sommet de ses manchons 38, lorsqu'il est en position haute, comme c'est le cas sur les deux parties de la figure 1.

Le vérin hydraulique 41 est agencé pour déplacer le plateau supérieur 5 en translation verticale, dans le cadre du nouveau mode de fonctionnement de la presse 1 de l'invention décrit ici. Dans ce mode de fonctionnement, le plateau inférieur 4 est fixe, en position basse, en appui sur les entretoises 20, comme dans le cas de la partie gauche de la figure 1, tandis que le plateau supérieur 5 est mobile en translation, grâce au vérin hydraulique 41. Les matrices inférieure 14 et supérieure 27 ne sont pas les mêmes que précédemment et ne comprennent notamment pas de doigts de positionnement 31 et d'alésages 34. Il n'est pas non plus forcément prévu d'activer les résistances 11, 25. Cet autre mode de fonctionnement correspond à une gamme de pressions différentes et à une utilisation de la presse 1 de l'invention en tant que presse "classique", pas forcément pour une application au redressage thermique.

Ce mode de fonctionnement additionel n'est pas incompatible avec le premier. Il suffit par exemple, pour passer de l'un à l'autre de changer les matrices 14, 27, le reste du dispositif restant identique, assurant un gain de place non négligeable au sein d'une unité de production, par exemple.

Lorsque le piston 43 est remonté, le plateau supérieur 5 est en position haute, en appui sur les entretoises 44. Le plateau inférieur 4 étant en appui sur les entretoises 20, la matrice supérieure 27 est alors éloignée de la matrice inférieure 14. Lorsque le vérin hydraulique 41 est activé et que le piston 43 est déplacé vers le bas, ce dernier entraîne en translation verticale descendante le plateau supérieur 5. Cette translation est autorisée par la translation qu'effectuent les couronnes 39, 39', solidaires du plateau supérieur 5, sur les colonnes 3. En fin de course, la matrice supérieure 5 vient en appui sur la matrice inférieure 4 et la fonction de presse est assurée.

Ainsi, la presse 1 de l'invention assure, d'une part, une fonction de presse classique, avec son plateau inférieur 4 fixe en position basse et son plateau supérieur 5 mobile en translation verticale grâce au vérin hydraulique 41, d'autre part, une fonction de presse de redressage thermique, avec son plateau supérieur 5 fixe et son plateau inférieur 4 mobile en translation verticale, grâce au vérin pneumatique 28, avec une certaine flottabilité assurant, en coopération avec les doigts de positionnement 31 et les alésages 34, un positionnement aisé et précis des matrices 14, 27 l'une par rapport à l'autre, les résistances 11, 25 et les divers isolants thermiques 10, 12, 13, 24, 26 assurant la fonction de chauffage isotherme nécessaire à cette deuxième fonction de redressage thermique.

Un autre mode de fonctionnement de la presse de l'invention, combinant les modes de fonctionnement précédents, va maintenant être décrit.

Cette troisième utilisation de la presse 1 peut être faite pour le redressage thermique d'aubes creuses de grande taille, par exemple. Les plateaux 8, 22 des supports isolants chauffants inférieur 7 et supérieur 21, ainsi que les matrices 14, 27, sont alors de forme rectangulaire, du fait de la taille des aubes. Les matrices 14, 27 comportent des moyens de positionnement tels que les doigts 31 et alésages 34 décrits précédemment.

Les deux matrices 14, 27 sont initialement éloignées l'une de l'autre, afin de permettre le chargement d'une aube entre elles. La matrice inférieure 14 est alors montée, grâce au vérin pneumatique 28, en direction de la matrice supérieure 27. Ce vérin pneumatique 28, en coopération avec les moyens de positionnement 31, 34, permet le bon centrage, sans contraintes, de l'aube entre les deux matrices 14, 27.

Le vérin pneumatique 28 ne permettant pas d'appliquer une force suffisante dans le cadre du procédé considéré, le plateau inférieur 4 est verrouillé dans sa position, grâce à des entretoises 20 dimensionnées à cet effet. Ainsi, les entretoises 20 , ou cales, sont ici amovibles, et utilisées lorsque l'on veut verrouiller le plateau inférieur 4 dans une position, qui n'est pas forcément sa position la plus basse. Plusieurs tailles d'entretoises 20 peuvent être prévues, en fonction du procédé mis en oeuvre.

Une fois le plateau inférieur 4 verrouillé dans sa position, le plateau supérieur 5 vient appliquer une force supplémentaire, grâce à l'action du vérin hydraulique 41, qui permet de générer une plus grande pression que le vérin pneumatique 28.

Ainsi, dans cette troisième utilisation de la presse de l'invention, le vérin pneumatique 28 assure le bon centrage, sans contraintes, de la pièce à presser, tandis que le vérin hydraulique 41 assure la fonction de mise sous pression supplémentaire de la pièce.

Il va de soi que ce troisième mode de fonctionnement n'est pas incompatible avec l'utilisation des résistances de chauffage 11.

## Revendications

1. Presse, comportant un premier élément (4, 7, 14) et un second élément (5, 21, 27) de maintien et de pressage d'une pièce à traiter entre eux, le premier élément (4, 7, 14) étant entraîné en translation verticale par rapport au second élément (5, 21, 27) par des moyens d'entraînement (28), lesdits éléments comprenant des moyens de positionnement (31, 34) l'un par rapport à l'autre en fin de course, **caractérisé par le fait que** le premier élément (4, 7, 14) est monté flottant par rapport au second élément (5, 21, 27), libre en translation et en rotation sur et autour du plan horizontal.

2. Presse selon la revendication 1, comprenant des moyens de guidage (3, 16) en translation du premier élément (4, 7, 14), un jeu étant ménagé entre le premier élément et les moyens de guidage (3, 16).

3. Presse selon la revendication 2, comprenant au moins une couronne (16) solidaire du premier élément (4, 7, 14), coulissant sur une colonne (3) formant bâti, un jeu étant ménagé entre la couronne (16) et colonne (3).

4. Presse selon l'une des revendications 1 à 3, dans laquelle le premier élément et le second élément comprennent chacun une matrice (14, 27) de maintien et de pressage de la pièce.

5. Presse selon l'une des revendications 1 à 4, dans laquelle les moyens de positionnement (31, 34) du premier élément (4, 7, 14) par rapport au second élément (5, 21, 27) comprennent au moins un doigt de positionnement (31) coopérant avec un alésage (34).

6. Presse selon les revendications 4 et 5, dans laquelle la matrice (14) du premier élément comprend au moins un dit doigt de positionnement (31) et la matrice (27) du second élément comprend au moins un dit alésage (34).

7. Presse selon l'une des revendications 5 ou 6, dans laquelle chaque doigt de positionnement (31) comprend une portion (32) de forme cylindrique et une portion (33) de forme tronconique.

8. Presse selon l'une des revendications 1 à 7, dans laquelle les moyens d'entraînement comprennent un vérin pneumatique (28).

9. Presse selon l'une des revendications 1 à 8 disposée verticalement, dans laquelle le premier élément (4, 7, 14) est situé en position inférieure et le second élément (5, 21, 27) en position supérieure.

10. Presse selon la revendication 9, comportant au moins une entretoise (20) de soutien du premier élément (4, 7, 14) dans une position et des seconds moyens d'entraînement (41) en translation du second élément (5, 21, 27) par rapport au premier élément (4, 7, 14).

11. Presse selon la revendication 10, dans laquelle les seconds moyens d'entraînement en translation comprennent un vérin hydraulique (41).

12. Presse selon l'une des revendications 10 ou 11, dans laquelle l'entretoise (20) est amovible.

13. Presse selon l'une des revendications 4 à 12, dans laquelle chaque élément comprend un plateau (4, 5) et un support isolant chauffant (7, 21) supportant la matrice (14, 27).

14. Presse selon la revendication 13, dans laquelle au moins une couche d'isolant thermique (12, 13, 26) est disposée à la périphérie des matrices (14, 27).

15. Presse selon l'une des revendications 13 ou 14, dans laquelle au moins un support isolant chauffant (7, 21) comprend des résistances de chauffage (11).

16. Presse selon la revendication 15, dans laquelle les résistances de chauffage (11) sont contenues dans des cartouches.

17. Presse selon la revendication 15, dans laquelle les résistances de chauffage (11) sont noyées et serties dans le support isolant chauffant (7, 21).

18. Utilisation d'une presse selon l'une des revendications 1 à 17 pour le redressage thermique d'une pièce formée par forgeage.

19. Utilisation d'une presse selon l'une des revendications 1 à 17 pour le maintien et le pressage d'une aube de turbomachine.

20. Utilisation d'une presse selon la revendication 10 et l'une des revendications 1 à 17, dans laquelle les moyens d'entraînement (28) du premier élément (4, 7, 14) remplissent une fonction de centrage de la pièce et les moyens d'entraînement (41) du second élément (5, 21, 27) remplissent une fonction de mise sous pression supplémentaire de la pièce.

## Claims

1. A press, including a first component (4, 7, 14) and a second component (5, 21, 27) for holding and pressing a workpiece to be processed between them, the first component (4, 7, 14) being driven into vertical translation relatively to the second component (5, 21, 27) by driving means (28), said components comprising means (31, 34) for positioning them relatively to each other at the limit of travel, **characterized by** the fact that the first component (4, 17, 14) is floatably mounted relatively to the second component (5, 21, 27), translationally and rotationally free on and around the horizontal plane.

2. The press according to claim 1, comprising means (3, 16) for translationally guiding the first component (4, 7, 14), a play being provided between the first component and the guiding means (3, 16).

3. The press according to claim 2, comprising at least one ring (16) integral with the first component (4, 7, 14) sliding on one column (3) forming a frame, play being provided between the ring (16) and the column (3).

4. The press according to one of claims 1 to 3, wherein the first component and the second component each comprise a die (14, 27) for holding and pressing the workpiece.

5. The press according to one of claims 1 to 4, wherein the positioning means (31, 34) of the first component (4, 7, 14) relatively to the second component (5, 21, 27) comprise at least one positioning finger (31) cooperating with a bore (34).

6. The press according to claims 4 and 5, wherein the die (14) of the first component comprises at least one so-called positioning finger (31) and the die (27) of the second component comprises at least one so-called bore (34).

7. The press according to one of claims 5 or 6, wherein each positioning finger (31) comprises a portion (32) with a cylindrical shape and a portion (33) with a frusto-conical shape.

8. The press according to one of claims 1 to 7, wherein the driving means comprise an air cylinder (28).

9. The press according to one of claims 1 to 8, positioned vertically, wherein the first component (4, 7, 14) is located in a lower position, and the second component (5, 21, 27) in an upper position.

10. The press according to claim 9, including at least one spacer (20) for supporting the first component (4, 7, 14) in one position, and second means (41) for driving into translation the second component (5, 21, 27) relatively to the first component (4, 7,14).

11. The press according to claim 10, wherein the second translation driving means comprise a hydraulic cylinder (41).

12. The press according to one of claims 10 or 11, wherein the spacer (20) is removable.

13. The press according to one of claims 4 to 12, wherein each component comprises a platen (4, 5) and a heating insulating support (7, 21) supporting the die (14,27).

14. The press according to claim 13, wherein at least one thermal insulating layer (12, 13, 26) is positioned at the periphery of the dies (14, 27).

15. The press according to one of claims 13 or 14, wherein at least one heating insulating support (7, 21) comprises heating resistors (11).

16. The press according to claim 15, wherein the heating resistors (11) are contained in cartridges.

17. The press according to claim 15, wherein the heating resistors (11) are embedded and crimped in the heating insulating support (7, 21).

18. The use of a press according to one of claims 1 to 17 for thermally straightening out a workpiece formed by forging.

19. The use of a press according to one of claims 1 to 17 for holding and pressing a turbine engine blade.

20. The use of a press according to claim 10, wherein the driving means (28) for the first component (4, 7, 14) fulfill a function for centering the workpiece and the driving means (41) of the second component (5, 21, 27) fulfill a function for further pressing of the workpiece.

## Patentansprüche

1. Presse mit einem ersten Element (4, 7, 14) und einem zweiten Element (5, 21, 27) zum Halten und Pressen eines zu bearbeitenden Werkstücks zwischen ihnen, wobei das erste Element (4, 7, 14) durch Antriebsmittel (28) in vertikaler Vorschubbewegung gegenüber dem zweiten Element (5, 21, 27) bewegt wird, wobei diese Elemente Positioniermittel (31, 34) zum Hubende-Positionieren zueinander aufweisen,
**dadurch gekennzeichnet,**
**dass** das erste Element (4, 7, 14) schwimmend gegenüber dem zweiten Element (5, 21, 27), vorschubfrei und drehfrei in und um die horizontale Ebene angebracht ist.

2. Presse nach Anspruch 1, die Führungsmittel (3, 16) für das erste Element (4, 7, 14) in Vorschubrichtung aufweist, wobei ein Spiel zwischen dem ersten Element und den Führungsmitteln (3, 16) ausgeführt ist.

3. Presse nach Anspruch 2, die mindestens einen mit dem ersten Element (4, 7, 14) fest verbundenen Kranz (16) aufweist, der auf einer einen Rahmen bildenden Säule (3) gleitet, wobei zwischen dem Kranz (16) und der Säule (3) ein Spiel ausgeführt ist.

4. Presse nach einem der Ansprüche 1 bis 3, bei der das erste Element und das zweite Element jeweils eine Matrize (14, 27) zum Halten und Pressen des Werkstücks aufweisen.

5. Presse nach einem der Ansprüche 1 bis 4, bei der die Positioniermittel (31, 34) des ersten Elements (4, 7, 14) gegenüber dem zweiten Element (5, 21, 27) mindestens einen Positionierstift (31) beinhalten, der mit einer Bohrung (34) zusammenwirkt.

6. Presse nach den Ansprüchen 4 und 5, bei der die Matrize (14) des ersten Elements (4, 7, 14) mindestens einen solchen Positionierstift (31) und die Matrize (27) des zweiten Elements (5, 21, 27) mindestens eine solche Bohrung (34) aufweist.

7. Presse nach einem der Ansprüche 5 oder 6, bei der jeder Positionierstift (31) einen zylindrisch geformten Abschnitt (32) und einen kegelstumpfförmigen Abschnitt (33) aufweist.

8. Presse nach einem der Ansprüche 1 bis 7, bei der die Antriebsmittel einen Pneumatikzylinder (28) umfassen.

9. Presse nach einem der Ansprüche 1 bis 8, bei der sich, wenn sie vertikal angeordnet ist, das erste Element (4, 7, 14) in der tieferen Position und das zweite Element (5, 21, 27) in der höheren Position befindet.

10. Presse nach Anspruch 9, die mindestens eine Stützstrebe (20) für das erste Element (4, 7, 14) in einer Position sowie zweite Antriebsmittel (41), um das zweite Element (5, 21, 27) zum ersten Element (4, 7, 14) in Vorschubrichtung zu bewegen, aufweist.

11. Presse nach Anspruch 10, bei der die zweiten Antriebsmittel in Vorschubrichtung einen Hydraulikzylinder (41) umfassen.

12. Presse nach einem der Ansprüche 10 oder 11, bei der die Stützstrebe (20) abnehmbar ist.

13. Presse nach einem der Ansprüche 4 bis 12, bei der jedes Element eine Platte (4, 5) und eine isolierende, beheizende Halterung (7, 21) umfasst, die die Matrize (14, 27) halten.

14. Presse nach Anspruch 13, bei der mindestens eine Wärmeisolierschicht (12, 13, 26) am Außenumfang der Matrizen (14, 27) angeordnet ist.

15. Presse nach einem der Ansprüche 13 oder 14, bei der mindestens eine isolierende, beheizende Halterung (7, 21) Heizwiderstände (11) aufweist.

16. Presse nach Anspruch 15, bei der die Heizwiderstände (11) in Kartuschen enthalten sind.

17. Presse nach Anspruch 15, bei der die Heizwiderstände (11) in der isolierenden, beheizenden Halterung (7, 21) versenkt und eingepresst sind.

18. Anwendung einer Presse nach einem der Ansprüche 1 bis 17 zum Thermo-Geraderichten eines durch Schmieden geformten Werkstücks.

19. Anwendung einer Presse nach einem der Ansprüche 1 bis 17 zum Halten und Pressen einer Turbomaschinen-Schaufel.

20. Anwendung einer Presse nach Anspruch 10 und einem der Ansprüche 1 bis 17, bei der die Antriebsmittel (28) des ersten Elements (4, 7, 14) eine Funktion des Zentrierens des Werkstücks erfüllen und die Antriebsmittel (41) des zweiten Elements (5, 21, 27) eine Funktion des zusätzlichen Unter-Druck-Setzens des Werkstücks erfüllen.
